(19) Europäisches Patentamt / European Patent Office / Office européen des brevets

(11) **EP 4 756 546 A1**

(12) **EUROPEAN PATENT APPLICATION**
published in accordance with Art. 153(4) EPC

(43) Date of publication:
**10.06.2026 Bulletin 2026/24**

(51) International Patent Classification (IPC):
**G05B 11/42** (2006.01)    **A61G 5/04** (2013.01)
**A61G 5/10** (2006.01)

(21) Application number: 25776973.7

(22) Date of filing: 25.02.2025

(52) Cooperative Patent Classification (CPC):
Y02T 10/72

(86) International application number:
**PCT/CN2025/078931**

(87) International publication number:
**WO 2025/200902 (02.10.2025 Gazette 2025/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 27.03.2024  CN 202410358421

(71) Applicant: XSTO (Guangzhou) Co., Ltd.
Guangzhou, Guangdong 510760 (CN)

(72) Inventors:
• **BAO, Shiwei**
Guangzhou, Guangdong 510760 (CN)

• **REN, Haijun**
Guangzhou, Guangdong 510760 (CN)
• **ZHAO, Yong**
Guangzhou, Guangdong 510760 (CN)
• **XU, Mingyu**
Guangzhou, Guangdong 510760 (CN)
• **CHEN, Zhipeng**
Guangzhou, Guangdong 510760 (CN)
• **XU, Jinbiao**
Guangzhou, Guangdong 510760 (CN)
• **ZHAN, Zhenyu**
Guangzhou, Guangdong 510760 (CN)

(74) Representative: **Murgitroyd & Company**
**165-169 Scotland Street**
**Glasgow G5 8PL (GB)**

(54) **GYROSCOPE-BASED DYNAMIC BALANCE CONTROL METHOD FOR ELECTRIC WHEELCHAIR**

(57) The present invention relates to a gyroscope-based dynamic balance control method for an electric wheelchair. A gyroscope acquires a current pitch angle, a current roll angle, and a traveling speed of the electric wheelchair. The pitch angle, roll angle, and traveling speed are input into an offline-trained random forest model to predict a rollover status of the electric wheelchair. When a rollover is predicted to occur, the electric wheelchair is controlled to operate at zero speed or a low speed under a rated load. When no rollover is predicted to occur, the electric wheelchair adjusts, in real time, deployment and retraction distances of left and right support wheels, such that the wheelchair maintains a minimum roll angle and continues traveling. The method monitors rollover risk in real time to achieve dynamic balance control.

acquiring, by a gyroscope, a current pitch angle and a current roll angle of the electric wheelchair, and acquiring a traveling speed of the electric wheelchair — S1

inputting pitch-angle, roll-angle, and traveling-speed of the electric wheelchair into an offline-trained random forest model to predict a rollover status of the electric wheelchair — S2

in response to predicting that a rollover of the electric wheelchair occurs, controlling the electric wheelchair to operate at zero speed or a low speed under a rated load — S3

in response to predicting that no rollover of the electric wheelchair occurs, adjusting, in real time, by the electric wheelchair, deployment and retraction distances of left and right support wheels, such that the wheelchair device maintains a minimum roll angle and continues traveling — S4

FIG. 1

EP 4 756 546 A1

## Description

## TECHNICAL FIELD

The present invention belongs to the technical field of intelligent control, and relates to a gyroscope-based dynamic balance control method for an electric wheelchair.

## BACKGROUND

In recent years, with the continuous improvement of living standards and the advancement of medical technologies, wheelchair devices have played an important role in providing convenience and support. Moreover, with population aging and an increasing number of persons with disabilities, demand for wheelchairs and public attention thereto have continued to grow.

However, although conventional wheelchairs can assist users in basic mobility, there remain certain challenges in terms of dynamic balance and stability. In many cases, users of conventional wheelchairs may face risks of tipping and loss of balance, particularly during movement, when traveling up or down slopes, or when traversing uneven terrain. Such instability not only affects user safety, but also limits daily activities and independence. Accordingly, it is important to develop a technology capable of improving the dynamic balance and stability of wheelchair devices.

## SUMMARY

To solve the above-mentioned problems in the prior art, the present invention provides a gyroscope-based dynamic balance control method for an electric wheelchair.

The objective of the present invention can be achieved by the following technical solution:

The present application provides a gyroscope-based dynamic balance control method for an electric wheelchair, comprising the following steps:

S1, acquiring, by a gyroscope, a current pitch angle and a current roll angle of the electric wheelchair, and acquiring a traveling speed of the electric wheelchair, wherein a ground slope at which the electric wheelchair is currently located is obtained based on the pitch angle, wherein the ground slope is an inclination angle of a ground surface relative to a horizontal plane, and wherein the roll angle is an angle by which the electric wheelchair rotates about a longitudinal axis of a wheelchair body thereof;

S2, inputting pitch-angle, roll-angle, and traveling-speed of the electric wheelchair into an offline-trained random forest model to predict a rollover status of the electric wheelchair, wherein, in the offline-trained random forest model, the pitch-angle, roll-angle, and traveling-speed of the electric wheelchair serve as explanatory variables, and the rollover status of the electric wheelchair serves as a response variable;

S3, in response to predicting that a rollover of the electric wheelchair occurs, controlling the electric wheelchair to operate at zero speed or a low speed under a rated load; and

S4, in response to predicting that no rollover of the electric wheelchair occurs, adjusting, in real time, deployment and retraction distances of left and right support wheels by the electric wheelchair, such that the wheelchair device maintains a minimum roll angle and continues traveling.

Further, in step S2, the offline-trained random forest model comprises the following construction steps:

S21, data preparation: preparing a dataset in a historical period comprising features and labels, wherein the features are the pitch-angle, roll-angle, and traveling-speed of the electric wheelchair, and the labels are the rollover status of the electric wheelchair;

S22, data processing: according to the rollover status of the electric wheelchair, marking data in which no rollover occurs as "0", and marking data in which a rollover occurs as "1";

S23, dataset partitioning: partitioning the dataset into a training set and a test set, using 70% of data samples in the dataset as the training set and 30% as the test set;

S24, random sampling: randomly sampling a certain number of data samples from the training set, and constructing, with replacement, a plurality of different training sets;

S25, constructing decision trees: for each randomly sampled training set, randomly selecting features to construct a decision tree model;

S26, integrating decision trees: integrating the constructed plurality of decision trees into the random forest model, and making a final prediction by a voting mechanism or an average value; and

S27, model evaluation: evaluating prediction performance of the random forest model on the test set based on evaluation metrics.

Further, in step S25, the decision tree model is configured as a CART model.

Further, in step S27, the evaluation metrics comprise accuracy, precision, recall, or an F1 score.

Further, in step S3, controlling the electric wheelchair to operate at zero speed or a low speed under the rated load specifically comprises detecting, by a linear Hall sensor, a motor position and a motor speed of the electric wheelchair so as to control the electric wheelchair, and comprises the following steps:

S31, acquiring real-time three-phase voltages of the linear Hall sensor;

S32, according to characteristics of the linear Hall sensor, acquiring a voltage median value of the linear Hall sensor in each electrical cycle, and calculating three-phase voltage differences between the real-time three-phase voltages and the voltage median value;

S33, performing normalization on the three-phase voltage differences;

S34, performing a Clarke transformation on the normalized three-phase voltage differences to obtain an $\alpha$-axis voltage value and a $\beta$-axis voltage value;

S35, obtaining a rotor position of the motor, namely an electrical angle, by calculating an arctangent function value of the $\alpha$-axis voltage value and the $\beta$-axis voltage value;

S36, using a phase-locked loop (PLL) to obtain an electrical frequency according to a change of the electrical angle;

S37, obtaining an actual motor rotational speed by converting the electrical frequency; and

S38, according to the actual motor rotational speed, controlling, by a PID controller, the electric wheelchair to operate at zero speed or a low speed under the rated load.

Further, in step S33, the normalization is calculated according to the following formula:

$$g(X) = \frac{X_i - X_{min}}{X_{max} - X_{min}}$$

wherein g(X) is a normalization function; $X_i$ is an i-th three-phase voltage difference; $X_{min}$ is a minimum value of the three-phase voltage differences; and $X_{max}$ is a maximum value of the three-phase voltage differences.

Further, in step S34, performing a Clarke transformation on the normalized three-phase voltage differences to obtain an $\alpha$-axis voltage value and a $\beta$-axis voltage value is calculated according to the following formulas:

$$U_\alpha = U_u - \frac{1}{2}U_v - \frac{1}{2}U_w$$

$$U_\beta = \frac{\sqrt{3}}{2}U_v - \frac{\sqrt{3}}{2}U_w$$

wherein $U_\alpha$ and $U_\beta$ respectively represent the $\alpha$-axis voltage value and the $\beta$-axis voltage value; and $U_u$, $U_v$, and $U_w$ are the normalized three-phase voltage differences.

Further, in step S35, obtaining the rotor position of the motor by calculating an arctangent function value of the $\alpha$-axis voltage value and the $\beta$-axis voltage value is calculated according to the following formula:

$$\theta = \arctan\frac{U_\alpha}{U_\beta},$$

wherein $\theta$ represents the rotor position of the motor; and $U_\alpha$ and $U_\beta$ respectively represent the $\alpha$-axis voltage value and the $\beta$-axis voltage value.

Further, in step S37, obtaining the actual motor rotational speed by converting the electrical frequency is calculated according to the following formula:

$$V = F * 60 / N,$$

wherein V represents the motor rotational speed; F represents the electrical frequency; and N represents a number of pole pairs.

Beneficial effects of the present invention:

A current pitch angle and a current roll angle of an electric wheelchair are acquired by a gyroscope, and a traveling speed of the electric wheelchair is acquired; pitch-angle, roll-angle, and traveling-speed of the electric wheelchair are input into an offline-trained random forest model to predict a rollover status of the electric wheelchair; when the electric wheelchair is predicted to roll over, a linear Hall sensor is employed to detect a motor position and a motor speed of the electric wheelchair, and the electric wheelchair is controlled to operate at zero speed or a low speed under a rated load; when the electric wheelchair is predicted not to roll over, the electric wheelchair adjusts, in real time, deployment and retraction distances of left and right support wheels, such that a wheelchair device maintains a minimum roll angle and continues traveling. By constructing the random forest model, the present invention monitors rollover risk of the electric wheelchair in real time, thereby achieving dynamic balance control of the electric wheelchair.

### BRIEF DESCRIPTION OF THE DRAWINGS

For ease of understanding by those skilled in the art, the present invention is further described below in conjunction with the accompanying drawings.

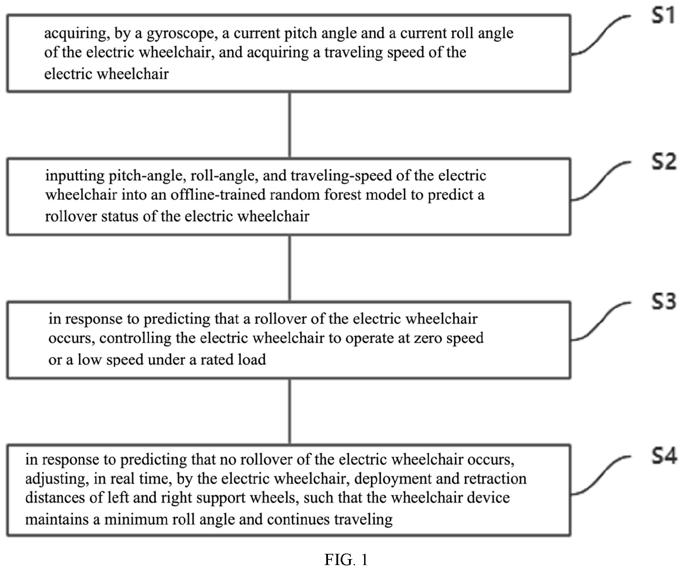

FIG. 1 is a flowchart of a gyroscope-based dynamic balance control method for an electric wheelchair according to the present invention.

### DETAILED DESCRIPTION

To further illustrate the technical means and effects adopted by the present invention to achieve the intended objective, the specific embodiments, structures, features, and effects according to the present invention are described in detail below with reference to the accompanying drawings and preferred embodiments.

Referring to FIG. 1, the present application provides a gyroscope-based dynamic balance control method for an electric wheelchair, comprising the following steps:

S1, acquiring, by a gyroscope, a current pitch angle and a current roll angle of the electric wheelchair, and acquiring a traveling speed of the electric wheelchair, wherein a ground slope at which the electric wheelchair is currently located is obtained based on the pitch angle, wherein the ground slope is an inclination angle of a ground surface relative to a horizontal plane, and wherein the roll angle is an angle by which the electric wheelchair rotates about a longitudinal axis of a wheelchair body thereof;

A gyroscope is a sensor device used to measure and sense angle, direction, and rotational speed. Based on a gyroscopic-effect principle, the gyroscope provides accurate attitude information by detecting rotational motion of an object. A gyroscope typically comprises a rotating component, a sensing element, and a signal-processing circuit. The rotating component comprises one or more rotating mass blocks, and when the object rotates, these mass blocks generate a gyroscopic effect. The sensing element measures an angular velocity or an angular change of the gyroscope and converts the measured angular velocity or angular change into an electrical signal. The signal-processing circuit processes and interprets the electrical signal to obtain data of the angle, direction, and rotational speed of the object. In a wheelchair device, the gyroscope can be used to sense a pitch angle, a roll angle, and attitude changes of the wheelchair, thereby achieving a gyroscope-based dynamic balance control technology and improving stability and safety of the wheelchair.

In this embodiment, a ground slope refers to an inclination degree or a gradient of a ground surface relative to a horizontal plane, and is used to describe height variations of the ground and an undulation degree of terrain. The slope is expressed in degrees. When the ground presents an upward inclination, the slope is a positive value; when the ground presents a downward inclination, the slope is also a positive value. That is, a negative slope is not considered, and the slope represents an inclination degree of the ground. A larger slope indicates a larger inclination degree of the ground. When an electric wheelchair travels on a ground surface with a larger slope, particularly when turning on the ground surface with a larger slope, safety accidents such as rollover are more likely to occur. For example, when the electric wheelchair travels uphill, the electric wheelchair requires more traction to overcome gravity and resistance to maintain forward movement; if the slope is excessively large, the electric wheelchair may lose traction, be unable to continue moving forward, or be prone to slipping. When the electric wheelchair travels downhill, the electric wheelchair may accelerate due to an increase in slope, causing difficulty for a rider to control the electric wheelchair. Therefore, a larger slope has an important impact on traction of the electric wheelchair and may affect traveling stability and safety. Obtaining a current ground slope at a current time helps evaluate safety of the electric wheelchair during traveling. A roll angle is an inclination angle, measured with respect to a longitudinal centerline of the electric wheelchair, of a left side or a right side of a wheelchair body relative to a horizontal plane, and the inclination angle is a positive value. A larger roll angle indicates a higher probability of rollover of the electric wheelchair and a higher probability of safety accidents.

S2, inputting pitch-angle, roll-angle, and traveling-speed of the electric wheelchair into an offline-trained random forest model to predict a rollover status of the electric wheelchair, wherein, in the offline-trained random forest model, the pitch-angle, roll-angle, and traveling-speed of the electric wheelchair serve as explanatory variables, and the rollover status of the electric wheelchair serves as a response variable.

In this embodiment, an offline-trained random forest model trained with pitch-angle, roll-angle, and traveling-speed of the electric wheelchair can predict whether the wheelchair is likely to roll over. A random forest is an ensemble learning method that makes predictions by constructing a plurality of decision trees and aggregating results thereof to obtain a final prediction result. During a training stage, a series of labeled data are used as input data, and the input data comprise pitch-angle, roll-angle, and traveling-speed data of the electric wheelchair, and corresponding rollover labels. The rollover labels are binary values, where 0 indicates that no rollover occurs and 1 indicates that a rollover occurs. By training the random forest model using these data, the model learns how to predict whether the wheelchair will roll over based on the input data. During a prediction stage, new electric wheelchair data are input into the trained random forest model, and the new electric wheelchair data comprise pitch-angle, roll-angle, and traveling-speed data. The model determines, based on features of the input data, and provides a prediction result indicating whether the wheelchair is likely to roll over.

It should be noted that, when training the model, a representative dataset should be used, and appropriate feature and model adjustments should be performed, so as to ensure that the model has desirable performance and generalization capability.

Further, in step S2, the offline-trained random forest model comprises the following construction steps:

S21, data preparation: preparing a dataset in a historical period comprising features and labels, wherein the features are the pitch-angle, roll-angle, and traveling-speed of the electric wheelchair, and the labels are the rollover status of the electric wheelchair;

It should be noted that, in this embodiment, the features are explanatory variables used to train the model, and the labels are response variables used to train the model.

S22, data processing: according to the rollover status of the electric wheelchair, marking data in which no rollover occurs as "0", and marking data in which a rollover occurs as "1";

S23, dataset partitioning: partitioning the dataset into a training set and a test set, using 70% of data samples in the dataset as the training set and 30% as the test set;

S24, random sampling: randomly sampling a certain number of data samples from the training set, and constructing, with replacement, a plurality of different training sets;

S25, constructing decision trees: for each randomly sampled training set, randomly selecting features to construct a decision tree model;

Further, in step S25, the decision tree model is configured as a CART model.

Classification and Regression Trees (CART) is a decision tree algorithm for classification and regression analysis. CART recursively partitions a dataset into smaller subsets, and at each node selects an optimal feature and a split point so as to minimize Gini impurity (for classification) or mean squared error (for regression), thereby ultimately generating a tree for prediction. A CART model is easy to understand and has strong interpretability, and can handle nonlinear relationships and high-dimensional data. By repeatedly partitioning the dataset, CART can effectively capture complex patterns in the data, and also has certain robustness to missing values and outliers. In a random forest, each decision tree is constructed based on the CART algorithm. Specifically, each tree in the random forest is an independent CART decision tree built with randomly selected features for modeling. The random forest makes a final decision by integrating prediction results of a plurality of CART decision trees, thereby improving overall accuracy and generalization capability of the model. Each tree is constructed based on a different random subset of training data, and, when selecting an optimal feature at each node, only a random subset of features is considered, which introduces randomness and reduces a risk of overfitting. Therefore, by leveraging advantages of CART decision trees and aggregating prediction results of multiple trees, the random forest improves model stability and prediction capability and has achieved broad success in practical applications.

S26, integrating decision trees: integrating a plurality of constructed decision trees into a random forest model, and making a final prediction by a voting mechanism or an average value.

It should be noted that, in the random forest, each decision tree is constructed based on a different training dataset and a different feature subset, thereby having a certain degree of randomness. A final prediction result can be determined by a voting mechanism or by averaging. In a classification problem, a majority voting manner can be adopted, and a category with the highest number of votes is selected as the final prediction result; in a regression problem, prediction results of a plurality of trees can be averaged as a final output. By integrating a plurality of decision trees into the random forest model, a risk of overfitting can be effectively reduced, and robustness and accuracy of the model can be improved.

S27, model evaluation: evaluating prediction performance of the random forest model on a test set based on evaluation metrics.

Further, in step S27, the evaluation metrics comprise accuracy, precision, recall, or an F1 score.

In this embodiment, accuracy is a ratio of a number of samples correctly predicted by the model to a total number of samples, and is one of the most commonly used evaluation metrics. A calculation formula thereof is: Accuracy = (TP + TN) / (TP + TN + FP + FN), where TP represents true positives, TN represents true negatives, FP represents false positives, and FN represents false negatives.

Precision measures how many predicted positive samples are true positive samples, and is an important metric for evaluating prediction accuracy of the model. A calculation formula thereof is: Precision = TP / (TP + FP).

Recall measures a ratio of a number of correctly predicted positive samples to a number of actual positive samples, and is also referred to as sensitivity. A calculation formula thereof is: Recall = TP / (TP + FN).

An F1 score is a harmonic mean of precision and recall, and comprehensively considers accuracy and completeness. A higher F1 score indicates a better balance between precision and recall. A calculation formula thereof is: F1 = 2 × (Precision × Recall) / (Precision + Recall).

S3, in response to predicting that a rollover of the electric wheelchair occurs, controlling the electric wheelchair to operate at zero speed or a low speed under a rated load.

Further, in step S3, controlling the electric wheelchair to operate at zero speed or a low speed under the rated load specifically comprises detecting, by a linear Hall sensor, a motor position and a motor speed of the electric wheelchair so as to control the electric wheelchair, and comprises the following steps:

S31, acquiring real-time three-phase voltages of the linear Hall sensor;

S32, according to characteristics of the linear Hall sensor, acquiring a voltage median value of the linear Hall sensor in each electrical cycle, and calculating three-phase voltage differences between the real-time three-phase voltages and the voltage median value;

S33, performing normalization on the three-phase voltage differences;

S34, performing a Clarke transformation on the normalized three-phase voltage differences to obtain an α-axis voltage value and a β-axis voltage value;

S35, obtaining a rotor position of the motor, namely an electrical angle, by calculating an arctangent function value of the α-axis voltage value and the β-axis voltage value;

S36, obtaining an electrical frequency by a phase-locked loop (PLL) based on a change of the electrical angle;

S37, obtaining an actual motor rotational speed by converting the electrical frequency; and

S38, according to the actual motor rotational speed, controlling, by a PID controller, the electric wheelchair to operate at zero speed or a low speed under the rated load.

In this embodiment, the linear Hall sensor is a sensor that is used to detect an operating position and a speed of a brushless DC motor by detecting a magnetic field change based on a Hall effect. When a change in an external device causes a magnetic field in the Hall sensor to change, the Hall sensor outputs a voltage signal corresponding to the magnetic field change according to a fixed rule. Thereafter, by measuring the voltage signal, an electrical angle and a speed of the motor to be measured are calculated.

Further, in step S33, the normalization is calculated according to the following formula:

$$g(X) = \frac{X_i - X_{min}}{X_{max} - X_{min}}$$

wherein g(X) is a normalization function; $X_i$ is an i-th three-phase voltage difference; $X_{min}$ is a minimum value of the three-phase voltage differences; and $X_{max}$ is a maximum value of the three-phase voltage differences.

Further, in step S34, performing a Clarke transformation on the normalized three-phase voltage differences to obtain an α-axis voltage value and a β-axis voltage value is calculated according to the following formulas:

$$U_\alpha = U_u - \frac{1}{2}U_v - \frac{1}{2}U_w$$

$$U_\beta = \frac{\sqrt{3}}{2}U_v - \frac{\sqrt{3}}{2}U_w$$

wherein $U_\alpha$ and $U_\beta$ respectively represent the α-axis voltage value and the β-axis voltage value; and $U_u$, $U_v$, and $U_w$ are the normalized three-phase voltage differences.

Further, in step S35, obtaining the rotor position of the motor by calculating an arctangent function value of the α-axis voltage value and the β-axis voltage value is calculated according to the following formula:

$$\theta = \arctan \frac{U_\alpha}{U_\beta},$$

wherein θ represents the rotor position of the motor; and $U_\alpha$ and $U_\beta$ respectively represent the α-axis voltage value and the β-axis voltage value.

Further, in step S37, obtaining an actual motor rotational speed by converting the electrical frequency is calculated according to the following formula:

$$V = F * 60 / N,$$

wherein V represents the motor rotational speed; F represents the electrical frequency; and N represents a number of pole pairs.

S4, in response to predicting that no rollover of the electric wheelchair occurs, adjusting, in real time, deployment and retraction distances of left and right support wheels by the electric wheelchair, such that the wheelchair device maintains a minimum roll angle and continues traveling.

Beneficial effects of the present invention:

A current pitch angle and a current roll angle of an electric wheelchair are acquired by a gyroscope, and a traveling speed of the electric wheelchair is acquired; pitch-angle, roll-angle, and traveling-speed data of the electric wheelchair are input into an offline-trained random forest model to predict a rollover status of the electric wheelchair; when the electric wheelchair is predicted to roll over, a linear Hall sensor is employed to detect a motor position and a motor speed of the electric wheelchair, and the electric wheelchair is controlled to operate at zero speed or a low speed under a rated load; when the electric wheelchair is predicted not to roll over, the electric wheelchair adjusts, in real time, deployment and retraction distances of left and right support wheels, such that a wheelchair device maintains a minimum roll angle and continues traveling. By constructing the random forest model, the present invention monitors rollover risk of the electric wheelchair in real time, thereby achieving dynamic balance control of the electric wheelchair.

The above descriptions are merely preferred embodiments of the present invention and are not intended to impose any form of limitation on the present invention. Although the present invention has been disclosed above with reference to preferred embodiments, the present invention is not limited thereto. Any person skilled in the art may make minor changes, equivalent substitutions, or modifications to the disclosed embodiments without departing from the scope of the technical solutions of the present invention. Any simple modifications, equivalent changes, and modifications made to the above embodiments according to the technical essence of the present invention, without departing from the technical solutions of the present invention, shall still fall within the scope of the technical solutions of the present invention.

**Claims**

1. A gyroscope-based dynamic balance control method for an electric wheelchair, comprising the following steps:

   S1, acquiring, by a gyroscope, a current pitch angle and a current roll angle of the electric wheelchair, and acquiring a traveling speed of the electric wheelchair, wherein a ground slope at which the electric wheelchair is currently located is obtained based on the pitch angle, wherein the ground slope is an inclination angle of a ground surface relative to a horizontal plane, and wherein the roll angle is an angle by which the electric wheelchair rotates about a longitudinal axis of a wheelchair body thereof;

   S2, inputting pitch-angle, roll-angle, and traveling-speed of the electric wheelchair into an offline-trained random forest model to predict a rollover status of the electric wheelchair, wherein, in the offline-trained random forest model, the pitch-angle, roll-angle, and traveling-speed of the electric wheelchair serve as explanatory variables, and the rollover status of the electric wheelchair serves as a response variable;

   S3, in response to predicting that a rollover of the electric wheelchair occurs, controlling the electric wheelchair to operate at zero speed or a low speed under a rated load; and

   S4, in response to predicting that no rollover of the electric wheelchair occurs, adjusting, in real time, deployment and retraction distances of left and right support wheels by the electric wheelchair, such that the wheelchair device maintains a minimum roll angle and continues traveling.

2. The gyroscope-based dynamic balance control method for an electric wheelchair according to claim 1, wherein, in step S2, the offline-trained random forest model comprises the following construction steps:

   S21, data preparation: preparing a dataset in a historical period comprising features and labels, wherein the features are the pitch-angle, roll-angle, and traveling-speed of the electric wheelchair, and the labels are the rollover status of the electric wheelchair;

   S22, data processing: according to the rollover status of the electric wheelchair, marking data in which no rollover occurs as "0", and marking data in which a rollover occurs as "1";

   S23, dataset partitioning: partitioning the dataset into a training set and a test set, with 70% of data samples in the dataset as the training set and 30% as the test set;

   S24, random sampling: randomly sampling a certain number of data samples from the training set, and constructing, with replacement, a plurality of different training sets;

   S25, constructing decision trees: for each randomly sampled training set, randomly selecting features to construct a decision tree model;

   S26, integrating decision trees: integrating the constructed plurality of decision trees into the random forest model, and making a final prediction by a voting mechanism or an average value; and

   S27, model evaluation: evaluating prediction performance of the random forest model on the test set based on evaluation metrics.

3. The gyroscope-based dynamic balance control method for an electric wheelchair according to claim 2, wherein, in step S25, the decision tree model is configured as a CART model.

4. The gyroscope-based dynamic balance control method for an electric wheelchair according to claim 2, wherein, in step S27, the evaluation metrics comprise accuracy, precision, recall, or an F1 score.

5. The gyroscope-based dynamic balance control method for an electric wheelchair according to claim 1, wherein, in step S3, controlling the electric wheelchair to operate at zero speed or a low speed under the rated load specifically comprises detecting, by a linear Hall sensor, a motor position and a motor speed of the electric wheelchair so as to control the electric wheelchair, and comprises the following steps:

   S31, acquiring real-time three-phase voltages of the linear Hall sensor;

   S32, according to characteristics of the linear Hall sensor, acquiring a voltage median value of the linear Hall sensor in each electrical cycle, and calculating three-phase voltage differences between the real-time three-phase voltages and the voltage median value;

   S33, performing normalization on the three-phase voltage differences;

   S34, performing a Clarke transformation on the normalized three-phase voltage differences to obtain an $\alpha$-axis voltage value and a $\beta$-axis voltage value;

S35, obtaining a rotor position of the motor, namely an electrical angle, by calculating an arctangent function value of the α-axis voltage value and the β-axis voltage value;

S36, obtaining an electrical frequency by a phase-locked loop (PLL) based on a change of the electrical angle;

S37, obtaining an actual motor rotational speed by converting the electrical frequency; and

S38, according to the actual motor rotational speed, controlling, by a PID controller, the electric wheelchair to operate at zero speed or a low speed under the rated load.

6.  The gyroscope-based dynamic balance control method for an electric wheelchair according to claim 5, wherein, in step S33, the normalization is calculated according to the following formula:

$$g(X) = \frac{X_i - X_{min}}{X_{max} - X_{min}},$$

wherein g(X) is a normalization function; $X_i$ is an i-th three-phase voltage difference; $X_{min}$ is a minimum value of the three-phase voltage differences; and $X_{max}$ is a maximum value of the three-phase voltage differences.

7.  The gyroscope-based dynamic balance control method for an electric wheelchair according to claim 5, wherein, in step S34, performing the Clarke transformation on the normalized three-phase voltage differences to obtain the α-axis voltage value and the β-axis voltage value is calculated according to the following formulas:

$$U_\alpha = U_u - \frac{1}{2}U_v - \frac{1}{2}U_w,$$

$$U_\beta = \frac{\sqrt{3}}{2}U_v - \frac{\sqrt{3}}{2}U_w,$$

wherein $U_\alpha$ and $U_\beta$ respectively represent the α-axis voltage value and the β-axis voltage value; and $U_u$, $U_v$, and $U_w$ are the normalized three-phase voltage differences.

8.  The gyroscope-based dynamic balance control method for an electric wheelchair according to claim 5, wherein, in step S35, obtaining the rotor position of the motor by calculating the arctangent function value of the α-axis voltage value and the β-axis voltage value is calculated according to the following formula:

$$\theta = \arctan \frac{U_\alpha}{U_\beta},$$

wherein θ represents the rotor position of the motor; and $U_\alpha$ and $U_\beta$ respectively represent the α-axis voltage value and the β-axis voltage value.

9.  The gyroscope-based dynamic balance control method for an electric wheelchair according to claim 5, wherein, in step S37, obtaining the actual motor rotational speed by converting the electrical frequency is calculated according to the following formula:

$$V = F \times 60 / N,$$

wherein V represents the motor rotational speed; F represents the electrical frequency; and N represents a number of pole pairs.

acquiring, by a gyroscope, a current pitch angle and a current roll angle of the electric wheelchair, and acquiring a traveling speed of the electric wheelchair

S1

inputting pitch-angle, roll-angle, and traveling-speed of the electric wheelchair into an offline-trained random forest model to predict a rollover status of the electric wheelchair

S2

in response to predicting that a rollover of the electric wheelchair occurs, controlling the electric wheelchair to operate at zero speed or a low speed under a rated load

S3

in response to predicting that no rollover of the electric wheelchair occurs, adjusting, in real time, by the electric wheelchair, deployment and retraction distances of left and right support wheels, such that the wheelchair device maintains a minimum roll angle and continues traveling

S4

FIG. 1

## INTERNATIONAL SEARCH REPORT

| International application No. |
| --- |
| **PCT/CN2025/078931** |

### A. CLASSIFICATION OF SUBJECT MATTER

G05B11/42(2006.01)i;  A61G5/04(2013.01)i;  A61G5/10(2006.01)i

According to International Patent Classification (IPC) or to both national classification and IPC

### B. FIELDS SEARCHED

Minimum documentation searched (classification system followed by classification symbols)

IPC，CPC：G05B11,A61G5

Documentation searched other than minimum documentation to the extent that such documents are included in the fields searched

Electronic data base consulted during the international search (name of data base and, where practicable, search terms used)

CNTXT, CNABS, VEN, ENTXTC, CNKI: 轮椅, 俯仰, 滚动, 坡度, 倾斜, 倾倒, 倾翻, 侧翻, 翻车, 森林, 训练, 角, 速度, 动平衡, 动态平衡, WHEELCHIAR, BALANC+, TILT+, PITCH, ROLL, INCLINAT+, RANDOM, FOREST, SPEED, VELOCITY, CART, CLARK

### C. DOCUMENTS CONSIDERED TO BE RELEVANT

| Category* | Citation of document, with indication, where appropriate, of the relevant passages | Relevant to claim No. |
| --- | --- | --- |
| PX | CN 118259584 A (XSTO (GUANGZHOU) CO., LTD.) 28 June 2024 (2024-06-28) entire description | 1-9 |
| Y | CN 117492451 A (XSTO (GUANGZHOU) CO., LTD.) 02 February 2024 (2024-02-02) description, paragraphs 0019-0060, and figure 1 | 1-9 |
| Y | CN 112566603 A (SUZHOU GOLDEN RIDGE INTELLIGENT TECHNOLOGY CO., LTD.) 26 March 2021 (2021-03-26) description, paragraphs 0063-0130 | 1-9 |
| A | CN 109657721 A (CHANGSHA UNIVERSITY OF SCIENCE AND TECHNOLOGY) 19 April 2019 (2019-04-19) entire description | 1-9 |
| A | CN 114730527 A (INTEL CORP.) 08 July 2022 (2022-07-08) entire description | 1-9 |
| A | KR 20200131574 A (TODO WORKS CO., LTD.) 24 November 2020 (2020-11-24) entire description | 1-9 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 May 2025** | **03 June 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
| --- | --- |
| | **PCT/CN2025/078931** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2017162487 A1 (ROBERT BOSCH GMBH) 28 September 2017 (2017-09-28) entire description | 1-9 |

**INTERNATIONAL SEARCH REPORT**
Information on patent family members

International application No.

**PCT/CN2025/078931**

| Patent document cited in search report | | | Publication date (day/month/year) | Patent family member(s) | | | Publication date (day/month/year) |
|---|---|---|---|---|---|---|---|
| CN | 118259584 | A | 28 June 2024 | None | | | |
| CN | 117492451 | A | 02 February 2024 | None | | | |
| CN | 112566603 | A | 26 March 2021 | None | | | |
| CN | 109657721 | A | 19 April 2019 | None | | | |
| CN | 114730527 | A | 08 July 2022 | US | 2022388505 | A1 | 08 December 2022 |
| | | | | WO | 2021118675 | A1 | 17 June 2021 |
| | | | | EP | 4073780 | A1 | 19 October 2022 |
| | | | | EP | 4073780 | A4 | 17 April 2024 |
| KR | 20200131574 | A | 24 November 2020 | KR | 102279756 | B1 | 20 July 2021 |
| WO | 2017162487 | A1 | 28 September 2017 | DE | 102016204763 | A1 | 28 September 2017 |

Form PCT/ISA/210 (patent family annex) (July 2022)